# EUROPÄISCHE PATENTANMELDUNG

(11) **EP 1 182 270 A1**
(43) Veröffentlichungstag der Anmeldung: **27.02.2002**
(21) Anmeldenummer: 01890236.1
(22) Anmeldetag: 16.08.2001
(51) Int. Cl.: C23C 4/12, C21B 3/08, B22F 9/08

(54) **Einrichtung zum Zerstäuben von flüssigen Medien, insbesondere flüssigen Schmelzen**

(30) Priorität: 16.08.2000 AT 14092000
(71) Anmelder: Holcim Ltd., 8645 Jona (CH)
(72) Erfinder: Edinger, Alfred, Dipl.-Ing., 6780 Bartholomäberg (AT)
(74) Vertreter: Haffner, Thomas M., Dr.

(57) **Zusammenfassung**

Bei einer Einrichtung zum Zerstäuben von flüssigen Medien, insbesondere flüssigen Schmelzen, bei welcher gasförmiges oder flüssiges Fluid auf einen Flüssigkeitsstrahl (5) gerichtet ausgestoßen werden, ist eine Mehrzahl von Düsen (4) für das gasförmige oder flüssige Fluid in Achsrichtung (6) des Flüssigkeitsstrahles (5) versetzt unter einem von 90° verschiedenen Winkel (β) auf den Flüssigkeitsstrahl (5) gerichtet angeordnet.

## Beschreibung

Die Erfindung bezieht sich auf eine Einrichtung zum Zerstäuben von flüssigen Medien, insbesondere flüssigen Schmelzen, bei welcher gasförmiges oder flüssiges Fluid auf einen Flüssigkeitsstrahl gerichtet ausgestoßen werden.

Bekannte Einrichtungen zum Zerstäuben von Schmelzen umfassen üblicherweise einen Schmelzentundish, aus dessen Ablaßöffnung ein Schmelzestrahl im freien Fall austreten kann. Um eine intensive Kühlung und eine rasche Zerstäubung zu gewährleisten, wird in der Regel ein Treibgasstrahl eingesetzt, welcher konzentrisch zur Tundishöffnung orientiert angeordnet ist und auf diese Weise die Schmelze als Mantel eines Gasstrahles in einen nachgeschalteten Kühl- bzw. Expansionsraum ausstößt. Die axial gerichteten Treibstrahlen beschleunigen die flüssige Schmelze, wobei sich insbesondere aufgrund von Temperaturdifferenzen oder beispielsweise dann, wenn als Treibgas bzw. Treibmedium Dampf eingesetzt wird, eine rasche Expansion und damit eine Aufweitung der Schmelze nach dem Austritt aus dem Tundishablauf ergibt. Neben der Verwendung von Dampf wurde auch die Verwendung von heißen Abgasen vorgeschlagen, welche auf entsprechend hohen Druck komprimiert wurden, um eine nennenswerte Schleppwirkung ausüben zu können.

Zur Erhöhung der Kühlwirkung und um insbesondere ein Verglasen durch besonders rasches Abkühlen zu erzielen, wurde bereits vorgeschlagen, im Kühl- bzw. Expansionsraum einer derartigen Ablauföffnung für flüssige Schlacken bzw. flüssige Schmelze radial oder halbradial gerichtete Wasserdüsen vorzusehen, deren Strahlen im wesentlichen in der gleichen Querschnittsebene auf den Mantel des Schmelzestrahles auftreffen. Derartige radial gerichtete Strahlen können aufgrund hoher Temperaturdifferenzen das Zerstäubungsverhalten verbessern und insbesondere eine rasche Abkühlung begünstigen. Bei derartigen Anordnungen ist aber in aller Regel ein in axialer Richtung beschleunigtes Treibgas erforderlich, da die in radialer Richtung wirkenden Strahlen im wesentlichen auf einen Punkt oder eine Querschnittsebene fokusiert sind und durch Interferenzen die Energie der radialen Komponenten der Strahlen dissipiert wird. Eine Einrichtung der genannten Art ist beispielsweise der EP 683 824 B1 zu entnehmen. Bei dieser bekannten Einrichtung tritt flüssige Schlacke bzw. schmelzflüssiges Material über eine Abstichöffnung in eine Mischkammer ein, wobei der Schmelzfluß unter Druck in die Mischkammer eingepreßt wird. An der Mischkammer münden radial auf den Strahl gerichtete Düsen für Druckwasser, wobei das eingestoßene Druckwasser mit hoher Geschwindigkeit expandiert und auf diese Weise eine weitere gerichtete Strömung unterstützt wird. Das Druckwasser dient hiebei in erster Linie der Abkühlung und rascheren Erstarrung. Die kinetische Energie des Druckwassers wird nicht für die Beschleunigung des Strahles eingesetzt.

Die Erfindung zielt nun darauf ab, die Zerstäubung eines Schmelzestrahles durch derartige in radialer oder halbradialer Richtung austretende Medien weiter zu verbessern, und insbesondere mit derartigen radial oder halbradial gerichteten Düsen Treibfluid aufzubringen, welches eine nennenswerte Beschleunigung des Strahles und damit über hohe Scherkräfte eine bessere Zerstäubung ermöglicht. Zur Lösung dieser Aufgabe besteht die erfindungsgemäße Einrichtung im wesentlichen darin, daß eine Mehrzahl von Düsen für das gasförmige oder flüssige Fluid in Achsrichtung des Flüssigkeitsstrahles versetzt unter einem von 90° verschiedenen Winkel auf den Flüssigkeitsstrahl gerichtet angeordnet ist. Dadurch, daß eine Mehrzahl von Düsen für das gasförmige oder flüssige Fluid in Achsrichtung des Flüssigkeitsstrahles versetzt und unter einem von 90° verschiedenen Winkel auf den Flüssigkeitsstrahl gerichtet angeordnet ist, gelingt es die eingangs geschilderte Dissipation der kinetischen Energie des Strahles zu verhindern, sodaß derartige radial bzw. halbradial gerichtete Komponenten eine ausgeprägte axiale Beschleunigungskomponente auf den Schmelzestrahl ausüben und auf diese Weise hohe Scherkräfte zur Wirkung gelangen. Derartige radiale Scherkräfte bzw. Schermomente ermöglichen es auf überaus kurze Distanz eine entsprechende Zerkleinerungs- und Zerstäubungswirkung auszuüben, wobei gleichzeitig eine Beschleunigung der zerkleinerten Teilchen und damit eine besonders rasche Abkühlung der voneinander getrennten Partikel ermöglicht wird. Es wird somit auf überaus kurze Distanz und mit entsprechend kleinbauenden Kühl- bzw. Expansionskammern ein hoher Zerkleinerungswirkungsgrad erzielt und es kann insbesondere auf axiale Treibgasstrahlen zur Gänze verzichtet werden. Gleichzeitig gelingt es mit einer derartigen Einbringung von in radialer Richtung austretendem Treibfluid auch die Austrittsöffnung entsprechend zu kühlen und gegen vorzeitigen Verschleiß besser zu schützen. Zu diesem Zweck ist mit Vorteil die Ausbildung so getroffen, daß die Düsen am inneren Mantel eines torusförmigen Düsenkörpers angeordnet sind.

Um die kinetische Energie der Fluidstrahlen voll zur Wirkung zu bringen, ist mit Vorteil die Ausbildung so getroffen, daß die Düsen längs einer zum Flüssigkeitsstrahl konzentrischen Schraubenlinie angeordnet sind, wobei mit Vorteil die Achsen der Düsenmündungen mit dem Flüssigkeitsstrahl in Ausströmrichtung des Flüssigkeitsstrahles spitze Winkel einschließen. Eine derartige Anordnung erlaubt es, daß die einzelnen diskreten Strahlen des gasförmigen oder flüssigen Mediums ohne Interferenzen wirkungsvoll Beschleunigungskräfte und Scherkräfte ausüben, wobei gleichzeitig dem Flüssigkeitsstrahl ein entsprechender Drall vermittelt wird, welcher eine rasche Separation der zerkleinerten Teilchen und damit eine besonders rasche Kühlung der Teilchen fördert.

Zur vollständigen Elimination von möglichen Interferenzen derartiger Treibfluidstrahlen ist die Ausbildung mit Vorteil so getroffen, daß die Auftreffpunkte der Fluidstrahlen aller Düsen am Flüssigkeitsstrahl voneinander verschieden sind, wobei zur Erzielung einer entsprechenden Rotationskomponente bzw. eines entsprechend großen Dralles mit Vorteil die Ausbildung so getroffen ist, daß die Achsen der Düsenmündungen jeweils einen gleichen Winkel mit der Achse des Flüssigkeitsstrahles einschließen.

Prinzipiell können als Treibfluid kritische unter- oder überkritische Treibgase eingesetzt werden, wobei auch die Düsenform jeweils beliebig gewählt werden kann. Als Treibgase, welche über die Düsen ausgestoßen werden, kommen in erster Linie Dampf, Stickstoff, Argon, Preßluft oder aber auch überkritisches CO₂ in Betracht. Als Treibfluid hat sich auch Druckwasser mit einem Druck von bis zu 125 bar als geeignet erwiesen. Durch die räumliche Versetzung bzw. Anordnung der Düsenmündungen längs einer Schraubenlinie treten praktisch keine Interferenzen zwischen den diskreten Treibgasstrahlen auf, sodaß ein hohes Maß an Scherkräften in axialer Richtung und in Umfangsrichtung und damit eine entsprechende intensive Zerkleinerungswirkung gewährleistet ist.

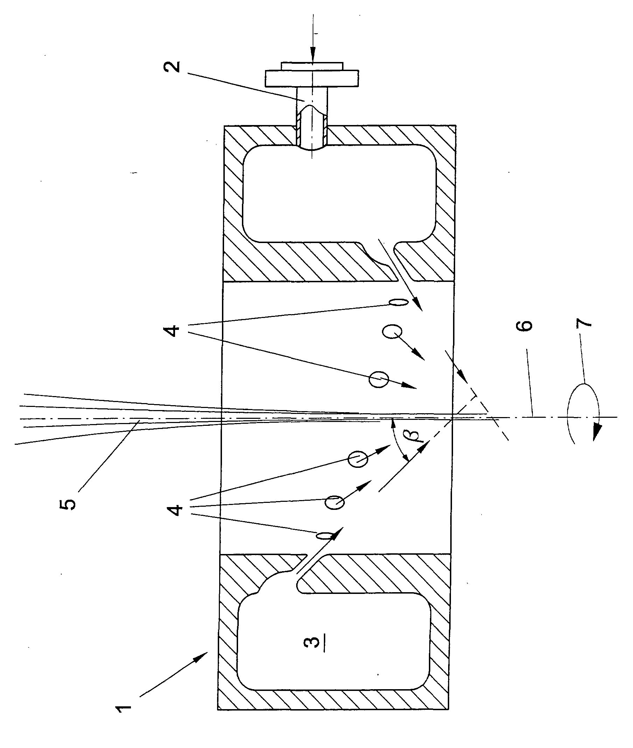

Die Erfindung wird nachfolgend anhand eines in der Zeichnung schematisch dargestellten Ausführungsbeispieles näher erläutert.

In der Zeichnung ist mit 1 ein torusförmiger Düsenkörper bzw. Düsenkasten ersichtlich, im welchen Treibfluid über einen Anschluß 2 eingebracht wird. Aus der Ringkammer 3 des torusförmigen Düsenkastens treten die Treibstrahlen über längs einer Schraubenlinie angeordneten Düsen 4 abwärts gerichtet aus und gelangen unter einem spitzen Winkel β in Kontakt mit dem mit 5 bezeichneten Schmelzestrahl, dessen axiale Richtung mit 6 angedeutet ist. Die einzelnen diskreten Strahlen aus den Düsen 4 treffen hiebei in Umfangsrichtung des Schmelzestrahles 5 versetzt an unterschiedlichen Punkten auf, sodaß Interferenzen vermieden werden und dem Schmelzestrahl die volle kinetische Energie der Einzelstrahlen aus den Düsen 4 als Beschleunigungskraft zur Verfügung gestellt wird, wobei eine deutliche Scherwirkung ausgeübt wird. Aufgrund der Anordnung der Düsen 4 längs einer Schraubenlinie erfolgt gleichzeitig ein Drehimpuls im Sinne des Pfeiles 7, sodaß dem Strahl ein Drall vermittelt wird, welcher zu einer Verbesserung der Zerkleinerungswirkung und weiteren Schermomenten Anlaß gibt.

## Patentansprüche

1. Einrichtung zum Zerstäuben von flüssigen Medien, insbesondere flüssigen Schmelzen, bei welcher gasförmiges oder flüssiges Fluid auf einen Flüssigkeitsstrahl gerichtet ausgestoßen werden, **dadurch gekennzeichnet, daß** eine Mehrzahl von Düsen (4) für das gasförmige oder flüssige Fluid in Achsrichtung (6) des Flüssigkeitsstrahles (5) versetzt unter einem von 90° verschiedenen Winkel (β) auf den Flüssigkeitsstrahl (5) gerichtet angeordnet ist.

2. Einrichtung nach Anspruch 1, **dadurch gekennzeichnet, daß** die Düsen (4) längs einer zum Flüssigkeitsstrahl (5) konzentrischen Schraubenlinie angeordnet sind.

3. Einrichtung nach Anspruch 1 oder 2, **dadurch gekennzeichnet, daß** die Achsen der Düsenmündungen (4) mit dem Flüssigkeitsstrahl (5) in Ausströmrichtung des Flüssigkeitsstrahles (5) spitze Winkel einschließen.

4. Einrichtung nach Anspruch 1, 2 oder 3, **dadurch gekennzeichnet, daß** die Düsen (4) am inneren Mantel eines torusförmigen Düsenkörpers (1) angeordnet sind.

5. Einrichtung nach einem der Ansprüche 1 bis 4, **dadurch gekennzeichnet, daß** die Auftreffpunkte der Fluidstrahlen aller Düsen (4) am Flüssigkeitsstrahl (5) voneinander verschieden sind.

6. Einrichtung nach einem der Ansprüche 1 bis 5, **dadurch gekennzeichnet, daß** die Achsen der Düsenmündungen (4) jeweils einen gleichen Winkel mit der Achse (6) des Flüssigkeitsstrahles (5) einschließen.
